# EUROPÄISCHE PATENTANMELDUNG

(11) **EP 2 665 156 A1**
(43) Veröffentlichungstag der Anmeldung: **20.11.2013**
(21) Anmeldenummer: 12167897.3
(22) Anmeldetag: 14.05.2012
(51) Int. Cl.: H02K 1/28, H02K 1/27

(54) **Rotor für einen Elektromotor**

(71) Anmelder: Grundfos Holding A/S, 8850 Bjerringbro (DK)
(72) Erfinder: Larsen, Soren Sondergaard, 8680 Ry (DK)
(74) Vertreter: Patentanwälte Vollmann & Hemmer

(57) **Zusammenfassung**

Die Erfindung betrifft einen Rotor für einen Elektromotor, welcher aus einer Rotorwelle (6) und einem auf die Rotorwelle (6) aufgesetztem Rotorkörper (8) zusammengesetzt ist, wobei der Rotorkörper (8) aus zumindest einem ersten und einem zweiten (12) ringförmigen Rotorteil gebildet ist, welche in axialer Richtung (X) aneinandergesetzt sind, wobei der erste (10) und der zweite (12) Rotorteil jeweils am Innenumfang (15) mehrere in Umfangsrichtung voneinander beabstandete Anlagebereiche (20, 22) aufweisen, welche mit dem Außenumfang der Rotorwelle (6) in Anlage sind, wobei der erste (10) und der zweite (12) Rotorteil um die Längsachse (X) der Rotorwelle (6) gegeneinander um einen Winkel (β) derart verdreht sind, dass die Anlagebereiche (20) des ersten Rotorteils (10) gegenüber den Anlagebereichen (22) des zweiten Rotorteils (12) im Umfangsrichtung versetzt sind, sowie einen Elektromotor mit einem solchen Rotor sowie ein Pumpenaggregat mit einem solchen Elektromotor.

## Beschreibung

Die Erfindung betrifft einen Rotor für einen Elektromotor sowie einen Elektromotor mit einem solchen Rotor und einem Pumpenaggregat, welches einen solchen Elektromotor als Antriebsmotor aufweist.

Es sind modular aufgebaute Rotoren für Elektromotoren, insbesondere Permanentmagnetrotoren bekannt, welche aus einer zentralen Rotorwelle und einem oder mehreren ringförmigen Rotorteilen gebildet werden, welche auf die Rotorwelle aufgesetzt, insbesondere aufgepresst sind. Mit solchen vorgefertigten Rotorteilen können Rotoren unterschiedlicher Länge modular ausgebaut werden. Wenn mehrere solche Rotorteile von einem Axialende nacheinander auf die Welle geschoben werden und dabei die Rotorteile kraftschlüssig durch Presspassung auf der Welle fixiert werden sollen, besteht das Problem, dass beim Aufschieben des ersten Rotorteils bereits die Anlagefläche für ein nachfolgendes zweites Rotorteil von dem ersten Rotorteil überstrichen wird, sodass diese Fläche beschädigt wird und dann das zweite aufzusetzende Rotorteil schlechter an der Rotorwelle fixiert werden kann.

Im Hinblick auf diese Problematik ist es Aufgabe der Erfindung, einen verbesserten Rotor für einen Elektromotor sowie einen Elektromotor mit einem solchen Rotor bereitzustellen, bei welchem mehrere Rotorteile jeweils sicher durch Presspassung auf der Rotorwelle fixiert werden können. Insbesondere ist es Aufgabe der Erfindung, ein Pumpenaggregat mit einem solchen Rotor entsprechend zu verbessern.

Diese Aufgabe wird durch einen Rotor mit den in Anspruch 1 angegebenen Merkmalen, durch einen Elektromotor mit den in Anspruch 12 angegebenen Merkmalen sowie durch ein Pumpenaggregat mit den in Anspruch 13 angegebenen Merkmalen gelöst. Bevorzugte Ausführungsformen ergeben sich aus den Unteransprüchen, der nachfolgenden Beschreibung sowie den beigefügten Figuren.

Der erfindungsgemäße Rotor ist als Rotor für einen Elektromotor ausgestaltet und ist aus einer Rotorwelle und einem auf die Rotorwelle aufgesetzten Rotorkörper zusammengesetzt. Der Rotorkörper ist dabei in axialer Richtung auf die Rotorwelle aufgeschoben und vorzugsweise mittels Presspassung auf der Rotorwelle kraftschlüssig fixiert. Der Rotorkörper ist aus mehreren Rotorteilen gebildet, d. h. es sind zumindest ein erster Rotorteil und zumindest ein zweiter Rotorteil vorgesehen. Die Rotorteile sind jeweils ringförmig ausgestaltet, d. h. sie weisen ein zentrales Loch auf, durch welches sich die Rotorwelle erstreckt. Dabei ist der Durchmesser dieses Loches bzw. der Querschnitt dieses Loches zum Querschnitt der Rotorwelle so dimensioniert, dass der Rotorteil durch Presspassung auf der Rotorwelle fixiert werden kann. Die mehreren Rotorteile sind in axialer Richtung aneinandergesetzt, d. h. sie liegen in axialer Richtung gesehen hintereinander auf der Rotorwelle und grenzen bevorzugt direkt aneinander an. So kann aus mehreren Rotorteilen der Rotorkörper zusammengesetzt werden. Die Verwendung mehrerer Rotorteile ermöglicht einen modularen Aufbau des Rotors. So können mit den vorgefertigten Rotorteilen Rotorkörper unterschiedlicher Längen zusammengesetzt werden, je nach dem wie viel Rotorteile verwendet werden.

Zur Fixierung der Rotorteile auf der Rotorwelle weisen die Rotorteile, d. h. zumindest der erste und der zweite Rotorteil, jeweils am Innenumfang mehrere in Umfangsrichtung voneinander beabstandete Ablagebereiche auf, welche mit dem Außenumfang der Rotorwelle in Anlage sind. D. h. bei dieser Ausgestaltung wird die Fixierung der Rotorteile an der Rotorwelle nicht über die gesamte Innenumfangsfläche der Rotorteile erreicht, sondern lediglich über mehrere in Umfangsrichtung voneinander beabstandete Anlagegebereiche. Der Innenquerschnitt der Rotorteile ist somit bevorzugt nicht exakt kreisförmig ausgestaltet, sondern kann eine von der kreisförmigen Grundform abweichende Innenkontur aufweisen, sodass die Anlagebereiche gebildet werden. Diese treten mit dem Außenumfang der Rotorwelle in Anlage. Die zwischen den Anlagebereichen gelegene Zwischenbereiche treten entweder gar nicht mit dem Außenumfang der Rotorwelle in Kontakt oder kommen mit geringerer oder ohne Pressung am Außenumfang der Rotorwelle zur Anlage. Zur kraftschlüssigen Fixierung mittels Presspassung dienen die Anlagebereiche. D. h. die Anlagebereiche sind so gelegen und in ihrem Abstand zueinander so dimensioniert, dass sie mit der Außenfläche der Rotorwelle eine Presspassung bilden können. Insbesondere ist somit der von den mehreren Anlagebereichen aufgespannte Querschnitt geringfügig kleiner als der Außenquerschnitt der Rotorwelle in dem Bereich, in welche die Anlagebereiche an der Rotorwelle zur Anlage kommen.

Erfindungsgemäß sind ferner die einzelnen Rotorteile um die Längsachse der Rotorwelle um einen bestimmten Winkel gegeneinander verdreht angeordnet. D. h. zumindest sind der erste und der zweite Rotorteil um die Längsachse der Rotorwelle gegeneinander um einen bestimmten Winkel verdreht. Dabei sind die Rotorteile um einen Winkel derart zueinander verdreht, dass die Anlagebereiche der einzelnen Rotorteile in Umfangsrichtung zueinander versetzt sind. D. h. zumindest sind die Anlagebereiche des ersten Rotorteils gegenüber den Anlagebereichen des zweiten Rotorteils in Umfangsrichtung zueinander versetzt. D. h. die Anlagebereiche der einzelnen Rotorteile fluchten in axialer Richtung gesehen nicht miteinander oder zumindest nicht vollständig miteinander. Dadurch wird erreicht, dass wenn ein erster Rotorteil auf die Rotorwelle aufgeschoben wird, die Anlagebereiche des ersten Rotorteiles nicht die gesamte Außenumfangsfläche der Rotorwelle in dem Bereich beschädigen, in dem später ein zweiter Rotorteil oder gegebenenfalls noch weiterer Rotorteil aufgesetzt wird. Beim Aufschieben der Rotorteile verursachen die Anlagebereiche Spuren in axialer Richtung am Außenumfang der Rotorwelle. Diese Spuren, welche der erste Rotorteil verursacht, liegen dann nicht an der derselben Winkelposition, an welcher später die Anlagebereiche des zweiten Rotorteils am Außenumfang der Rotorwelle zur Anlage kommen. D. h. die Anlagebereiche des zweiten Rotorteils können zumindest abschnittsweise mit Bereichen der Rotorwelle in Anlage kommen, welche nicht von den Anlagebereichen des ersten Rotorteils bei dessen Aufschieben überstrichen wurden. Bei Verwendung von mehr als zwei Rotorteilen gilt dies entsprechend für die nachfolgenden Rotorteile. Die nachfolgenden Rotorteile kommen mit ihren Anlagebereichen an Umfangsabschnitten der Rotorwelle zur Anlage, welche zuvor nicht von Anlagebereichen der zuvor aufgeschobenen Rotorteile überstrichen wurden, d. h. in Umfangsbereichen der Rotorwelle, welche keine Spuren vom Aufschieben der vorangehend aufgeschobenen Rotorteile aufweisen. So kann für sämtliche Rotorteile eine sichere kraftschlüssige Fixierung auf der Rotorwelle erreicht werden, unabhängig davon, ob sie als erstes oder nachfolgend auf die Rotorwelle aufgeschoben wurden.

Die Rotorteile sind vorzugsweise als Blechpakete ausgebildet, d. h. sie weisen eine Vielzahl von in axialer Richtung aufeinander geschichteter Bleche auf. Die Bleche können beispielsweise im Stanz-Paketier-Verfahren gestanzt und zusammengefügt sein. Gerade bei einer solchen Anordnung von Blechen ergibt sich aufgrund der Kanten zwischen den Blechen am Innenumfang eine unebene Oberfläche, welche beim Aufschieben auf die Rotorwelle zu einer Beschädigung der Anlagebereiche für nachfolgend aufzusetzende Rotorteile führen könnte, was durch die beschriebene erfindungsgemäße Verdrehung der Rotorteile zueinander vermieden wird.

Die feste Verbindung zwischen Rotorteilen und Rotorwelle wird durch eine plastische und/oder elastische Verformung der Rotorteile und/oder der Rotorwelle erreicht. Besonders bevorzugt kommt es zu einer elastischen Verformung, welche eine Klemmkraft in radialer Richtung erzeugt und so die Rotorteile kraftschlüssig am Außenumfang der Rotorwelle fixiert.

Bevorzugt weisen die ringförmigen Rotorteile jeweils einen Innenumfang von kreisförmiger Grundform auf und die Anlagenbereiche erstrecken sich im Querschnitt in Richtung einer Sehne zu dieser Grundform. D. h. die Grundform des Innenumfangs ist somit im Querschnitt kreisförmig. Insgesamt hat der Innenumfangs somit eine kreiszylindrische Grundform konzentrisch zur Längs- bzw. Drehachse der Rotorwelle. Die Anlagebereiche erstrecken sich im Querschnitt in Richtung einer Sehne, vorzugsweise über die gesamte axiale Länge des Innenumfanges des Rotorteils. Dabei erstrecken sich die Anlagebereiche zweckmäßigerweise parallel zu der Längsachse der Rotorwelle. Durch die im Querschnitt sehnenförmige Erstreckung der Anlagebereiche verkleinern die Anlagebereiche den von der Grundform definierten freien Innenquerschnitt der Rotorteile, sodass die Anlagebereiche auf eine Rotorwelle mit kreisförmigem Querschnitt und Durchmesser, welcher dem Innendurchmesser der Rotorteile entspricht, mit einer Presspassung aufgesetzt werden können. Bevorzugt ist der Außendurchmesser der Rotorwelle geringfügig kleiner als der Innendurchmesser der kreisförmigen Grundform des Innenquerschnittes der Rotorteile, wobei die sehnenförmigen Anlagebereiche so dimensioniert und angeordnet sind, dass der von innen begrenzte Querschnitt kleiner als der Außendurchmesser der Rotorwelle ist, sodass beim Aufschieben die Anlagebereiche mit dem Außenumfang der Rotorwelle kraftschlüssig nach Art einer Presspassung in Eingriff treten. Gleichzeitig können die Zwischenbereiche zwischen den Anlagebereichen den Außenumfang der Rotorwelle überstreichen ohne die Oberfläche zu beschädigen.

Besonders bevorzugt sind die Anlagebereiche als ebene, d. h. nicht gekrümmte Flächen ausgebildet. D. h. diese Flächen schneiden sowohl die kreisförmige Grundform des Innenquerschnittes der Rotorteile nach Art einer Sehne als auch den kreisförmigen Außenumfang der Rotorwelle. Der kreisförmige Außenumfang der Rotorwelle stellt dabei den Außenumfang der Rotorwelle dar, welchen diese vor Aufsetzen der Rotorteile hat.

Wie beschrieben, ist der von den Anlagebereichen aufgespannte Querschnitt bevorzugt kleiner als der Außenquerschnitt der Rotorwelle, sodass eine Presspassung beim Aufsetzen der Anlageteile auf den Außenumfang der Rotorwelle erreicht wird.

Bei dem Rotor handelt es sich vorzugsweise um einen Permanentmagnetrotor. D. h. der Rotor weist permanent magnetisierte Pole auf, sei es durch eingesetzte Magnete oder durch entsprechende Magnetisierung eines geeigneten Rotormaterials. Gemäß einer bevorzugten Ausführungsform der Erfindung weisen die Rotorteile jeweils Ausnehmungen auf, in welchen Permanentmagnete angeordnet sind. Der so gebildete Rotor ist damit ein Permanentmagnetrotor, welcher sich zum Einsatz in hoch effizienten Elektromotoren eignet, wie sie beispielsweise in Pumpenaggregaten Verwendung finden. Die Ausnehmungen mit den Permanentmagneten in dem ersten Rotorteil können weiter bevorzugt zu den Ausnehmungen mit den Permanentmagneten in dem zweiten Rotorteil in Umfangsrichtung versetzt sein. So werden die Permanentmagnete der einzelnen Rotorteile in Umfangsrichtung zueinander versetzt. Auf diese Weise kann das Rastmoment des Rotors reduziert werden und ein gleichmäßigerer Lauf realisiert werden. Dies ist insbesondere dann von Vorteil, wenn die Rotorteile aus aufeinandergestapelten Blechen gebildet sind, da bei einer solchen gebildet sind, da bei einer solchen Ausgestaltung es nur schwer möglich ist, die Permanentmagnete schräg in den Rotorteilen anzuordnen. Die vorangehend beschriebene Ausgestaltung ermöglicht es dabei vielmehr, dass sämtliche Bleche gleich ausgebildet werden können und nur die einzelnen Rotorteile gegeneinander verdreht werden.

Besonders bevorzugt sind der erste und der zweite Rotorteil identisch ausgebildet und um die Längsachse der Rotorwelle verdreht zueinander angeordnet. Dies ermöglicht eine besonders einfache Ausgestaltung, da nur ein Typ von Rotorteilen vorgesehen werden muss. Die einzelnen Rotorteile werden dann lediglich in Umfangsrichtung verdreht bzw. versetzt zueinander auf die Rotorwelle aufgesetzt, wodurch auch gleichzeitig der Versatz der Anlagebereiche in Umfangsrichtung erreicht wird. Wenn die Rotorteile Permanentmagnete enthalten, werden diese gleichzeitig ebenfalls in der zuvor beschrieben Weise in Umfangsrichtung zueinander angeordnet. Auch bei Verwendung von mehr als zwei solcher Rotorteile ist es möglich, dass alle Rotorteile in Umfangsrichtung zueinander versetzt auf eine Rotorwelle aufgesetzt werden.

Besonders bevorzugt kann der erste Rotorteil gegenüber dem zweiten Rotorteil um einen Winkel zwischen 5° und 25°, vorzugsweise zwischen 5° und 15° um die Längs- bzw. Drehachse der Rotorwelle verdreht sein. Werden mehr als zwei Rotorteile angeordnet, können die einzelnen Rotorteile jeweils zu dem vorangehenden Rotorteil um einen solchen Winkel verdreht sein. So kann beispielsweise der zweite Rotorteil gegenüber dem ersten Rotorteil um einen Winkel zwischen 5° und 25° verdreht sein, während der dritte Rotorteil gegenüber dem zweiten Rotorteil wiederum einen Winkel zwischen 5° und 25° verdreht ist. Alle Rotorteile werden dabei bevorzugt in dieselbe Umfangsrichtung verdreht, sodass dann beispielsweise der dritte Rotorteil gegenüber dem ersten Rotorteil um einen Winkel zwischen 10° und 50° verdreht ist. Dadurch, dass alle Rotorteile in dieselbe Richtung verdreht werden, wird erreicht, dass die Anlagebereiche aller Rotorteile zueinander um ein gewisses Maß in Umfangsrichtung versetzt sind, sodass die Anlagebereiche sämtlicher Rotorteile nicht oder zumindest nicht vollständig an Umfangsabschnitten der Rotorwelle zur Anlage kommen, welche zuvor von Anlagebereichen anderer Rotorteile bei deren Aufschieben auf die Welle überstrichen wurden. So können alle Rotorteile sicher am Außenumfang der Welle fixiert werden.

Gemäß einer weiteren bevorzugten Ausführungsform können die Rotorteile einen Außenumfang aufweisen, welcher mit abgeflachten Abschnitten versehen ist. Solche abgeflachten Abschnitte können ebenfalls dazu dienen, das magnetische Rastmoment des Rotors und dessen gleichmäßigen Lauf zu optimieren. Vorzugsweise sind sowohl die Anlagenbereiche am Innenumfang der Rotorteile als auch mögliche abgeflachte Umfangsbereiche am Außenumfang der Rotorteile gleichmäßig über den Umfang verteilt angeordnet, sodass sie keine Unwuchten verursachen.

Weiter bevorzugt sind die abgeflachten Bereiche am Außenumfang der Rotorteile in den Umfangsbereichen der Rotorteile gelegen, in welchen die Endbereiche der Ausnehmungen für die Permanentmagnete gelegen sind. Die Abflachungen dienen dabei der Optimierung des Magnetfeldes des Permanentmagnetrotors, sodass dessen Rastmoment reduziert und ein gleichmäßiger Lauf, d. h. vibrationsarmer Lauf, erreicht werden kann.

Die Rotorwelle weist besonders bevorzugt zumindest in demjenigen Bereich, in welchem die Rotorteile aufgesetzt sind, d. h. dem Axialbereich, in welchem die Rotorteile aufgesetzt sind, eine gewalzte insbesondere glatt gewalzte Oberfläche auf. Durch Walzen kann zum einen eine glatte Oberfläche und zum anderen eine erhöhte Oberflächenfestigkeit realisiert werden, welche die kraftschlüssige Fixierung der Rotorteile begünstigt.

Gegenstand der Erfindung ist neben dem vorangehend beschrieben Rotor für einen Elektromotor auch ein Elektromotor mit einem solchen Rotor. Der Elektromotor weist dabei bevorzugt diejenigen Merkmale des Rotors auf, welche vorangehend beschrieben wurden. Bei dem Elektromotor handelt es sich bevorzugt um einen Synchronmotor, insbesondere einen bürstenlosen Motor wie beispielsweise einen Permanentmagnetmotor. Besonders bevorzugt kann ein solcher Elektromotor als Antriebsmotor für eine Pumpe Verwendung finden. So kann er Teil eines Pumpenaggregates sein. Auch ein solches Pumpenaggregat ist Gegenstand der Erfindung, wobei das Pumpenaggregat einen Elektromotor mit einem Rotor aufweist, wie er vorangehend beschrieben wurde.

Nachfolgend wird die Erfindung beispielhaft anhand der beigefügten Figuren beschrieben. In diesem zeigt:
- Fig. 1: einen elektrischen Antriebsmotor,
- Fig. 2: eine Seitenansicht des Rotors des Elektromotors gemäß Fig. 1,
- Fig. 3: eine perspektivische Ansicht des Rotorkörpers des Rotors gemäß Fig. 2,
- Fig. 4: vergrößert das Detail IV aus Fig. 3,
- Fig. 5: eine perspektivische Ansicht der Rotors gemäß Fig. 2,
- Fig. 6: eine Schnittansicht entlang der Linie VI-VI in Fig. 2 und
- Fig. 7: vergrößert das Detail VII aus Fig.6.

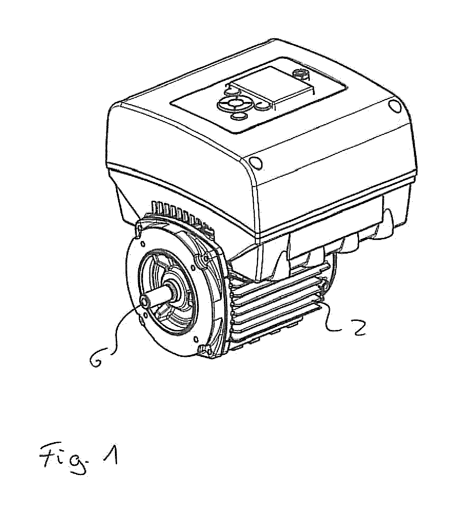

Der in Fig. 1 gezeigte elektrische Antriebsmotor bzw. Elektromotor weist in bekannter Weise ein Statorgehäuse 2 mit einem darin angeordneten Stator sowie mit einem darin angeordneten Stator sowie einem Rotor 4 auf. Von dem Rotor steht die Rotorwelle aus dem Statogehäuse 2 nach außen vor und kann so mit anzutreibenden Geräten, wie beispielsweise einer Pumpe verbunden werden.

Der Rotor 4 ist aus einer Rotorwelle 6 gebildet, auf welche ein Rotorkörper 8 aufgesetzt bzw. aufgepresst ist. Der Rotorkörper 8 ist in diesem Beispiel aus zwei Rotorteilen 10 und 12 zusammengesetzt und weist an seinen axialen Stirnenden Deckscheiben 14 auf. Die Rotorteile 10 und 12 können jeweils aus einer Vielzahl in axialer Richtung aufeinandergestapelter Bleche gebildet sein. Die beiden Rotorteile 10 und 12 sind identisch ausgebildet und haben eine ringförmige Grundform mit einem zentralen Loch 16, durch welches sich die Rotorwelle 6 hindurch erstreckt. Das Loch 16 weist eine Grundform mit einem kreisförmigen Querschnitt auf, welche über die axiale Länge in Richtung der Längs- bzw. Drehachse X der Rotorwelle 6 konstant ist. Das Loch 16 hat somit eine kreiszylindrische Grundform. Der Innendurchmesser dieser kreiszylindrischen Grundform ist dabei größer als der Außendurchmesser des Abschnittes 18 der Rotorwelle 6, auf welchen die Rotorteile 10 und 12 aufgesetzt sind. Zur Fixierung der Rotorteile 10 und 12 am Abschnitt 18 der Rotorwelle 6 weisen die Rotorteile 10, 12 an ihrem Innenumfang Anlagebereiche 20, 22 auf. Die Anlagebereiche 20 des ersten Rotorteils 10 sind dabei gleich zu den Anlagenbereichen 22 des zweiten Rotorteils 12 ausgebildet, d. h. die Rotorteile 10 und 12 sind identisch ausgebildet. Die Anlagebereiche 20, 22 erstrecken sich im Querschnitt gesehen sehnenförmig zu der kreisförmigen Grundform des Loches 16. Dabei erstrecken sich die Anlagebereiche 20, 22 parallel zur Längsachse X des Rotors über die gesamte axiale Länge der Rotorteile 10 und 12. Die Anlagebereiche 20, 22 weisen über ihre axiale Länge eine konstante Breite auf und sind eben bzw. plan, d. h. ohne Krümmung ausgebildet. Die mehreren Anlagebereiche 20 am Innenumfang des Rotorteils 10 und die mehreren Anlagebereiche 22 am Innenumfang des Rotorteils 12 sind jeweils gleichmäßig beabstandet über den Innenumfang verteilt. So verbleiben zwischen den Anlagebereichen 20 bzw. 22 Zwischenbereiche 24, welche der kreisförmigen Grundform folgend gekrümmt sind. Die Anlagebereiche 20, 22 verkleinern den freien Innenquerschnitt des Loches 16 so, dass er kleiner als der Außendurchmesser des im Querschnitt kreisförmigen Abschnittes 18 der Rotorwelle 6 ist. D. h. die im Querschnitt sehnenförmigen Anlagebereiche 20, 22 schneiden den Außenumfang des Abschnittes 18 der Rotorwelle 6. So wird eine Presspassung zwischen den Anlagebereichen 20, 22 der Rotorteile 10, 12 und dem Abschnitt 18 der Rotorwelle 6 erreicht. Die Zwischenbereiche 24 liegen mit geringerer Pressung, vorzugsweise ohne Pressung oder überhaupt nicht am Außenumfang des Abschnittes 18 der Rotorwelle 6 an.

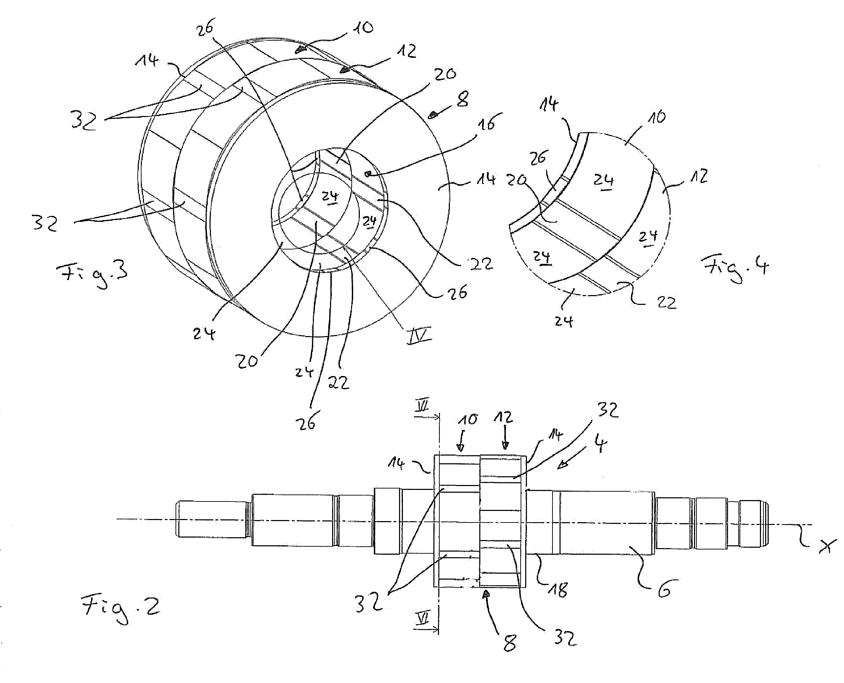

Die identisch ausgebildeten Rotorteile 10, 12 sind um einen Winkel β, welcher beispielsweise etwa 10° betragen kann, um die Längsachse X verdreht zueinander auf der Rotorwelle 6 angeordnet. Dies bewirkt, dass die Anlagebereiche 20 und 22 der beiden Rotorteile 10 und 12 um den Winkel β gegeneinander verdreht sind und somit nur in einem kleinen Teilbereich überlappen und nicht vollständig fluchten. So wird verhindert, dass wenn zunächst der Rotorteil 10 in Fig. 2 von rechts auf die Rotorwelle 6 aufgeschoben wird, die Anlagebereiche 20 des Rotorteils 10 die Oberflächenbereiche in dem Abschnitt 18 beschädigen, an welchen später die Anlagebereiche 22 des nachfolgend aufgesetzten zweiten Rotorteils 12 zur Anlage kommen sollen. D. h. es wird erreicht, dass beide Rotorteile 10 und 12 mit ihren Anlagebereichen 20 und 22 an unbeschädigten Oberflächenbereichen der Rotorwelle 6 zur Anlage kommen und so für beide Rotorteile 10 und 12 eine definierte Presspassung zur Fixierung erzielt wird. Die Deckscheiben 14 weisen an ihrem Innenumfang ebenfalls Anlagebereiche 26 auf, welche sehnenförmig zu der kreisförmigen Grundform des Innenumfanges ausgebildet sind und eine Presspassung mit der Oberfläche der Rotorwelle 6 eingehen. Auch die Anlagebereiche 26 der Deckscheiben 14 sind im Winkel versetzt zu den Anlagebereichen 20 und 22 angeordnet.

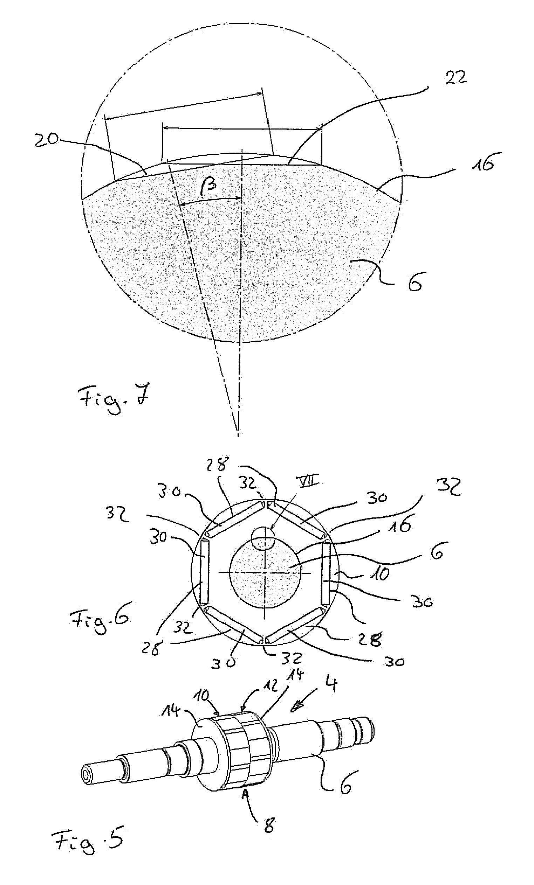

Die Rotorteile 10 und 12 weisen, wie in Fig. 6 zu erkennen ist, Ausnehmungen 28 auf, in welche Permanentmagnete 30 eingesetzt sind. D. h. der Rotor 4 ist als Permanentmagnetrotor ausgebildet. Da die beiden Rotorteile 10 und 12 identisch ausgebildet sind, sind auch die Ausnehmungen bzw. Taschen 28 identisch ausgebildet. Durch die verdrehte Anordnung um den Winkel β werden somit auch die Ausnehmungen 28 der beiden Rotorteile 10 und 12 und damit die Permanentmagnete 30 um den Winkel β verdreht zueinander angeordnet. Dadurch kann das Rastmoment des Rotors verringert werden. Am Außenumfang, welcher eine im Querschnitt kreisförmige Grundform aufweist, weisen die Rotorteile 10, 12 abgeflachte Abschnitte 32 auf. Die abgeflachten Abschnitte 32 erstrecken sich in axialer Richtung über die gesamte Länge der Rotorteile 10, 12. Sie sind als Streifen in denjenigen Umfangsbereichen angeordnet, welche radial außenliegend der Enden der Ausnehmungen 28 gelegen sind. D. h. die abgeflachten Abschnitte 32 überdecken am Außenumfang die Bereiche, an welchen die Ausnehmungen 28 aneinander angrenzen. Durch diese abgeflachten Bereiche kann der magnetische Fluss in den Rotorteilen zwischen den Permanentmagneten so optimiert werden, dass das Rastmoment reduziert wird.

### Bezugszeichenliste

- 2: Statorgehäuse
- 4: Rotor
- 6: Rotorwelle
- 8: Rotorkörper
- 10, 12: Rotorteile
- 14: Deckscheiben
- 16: Loch
- 18: Abschnitt
- 20, 22: Anlagebereiche
- 24: Zwischenbereich
- 26: Anlagebereich
- 28: Ausnehmungen
- 30: Permanentmagnete
- 32: abgeflachte Abschnitte

- X: Längsachse
- β: Verdrehwinkel zwischen den Rotorteilen 10 und 12

## Patentansprüche

1. Rotor für einen Elektromotor, welcher aus einer Rotorwelle (6) und einem auf die Rotorwelle (6) aufgesetztem Rotorkörper (8) zusammengesetzt ist, wobei der Rotorkörper (8) aus zumindest einem ersten und einem zweiten (12) ringförmigen Rotorteil gebildet ist, welche in axialer Richtung (X) hintereinander angeordnet sind, **dadurch gekennzeichnet, dass**
der erste (10) und der zweite (12) Rotorteil jeweils am Innenumfang (15) mehrere in Umfangsrichtung voneinander beabstandete Anlagebereiche (20, 22) aufweisen, welche mit dem Außenumfang der Rotorwelle (6) in Anlage sind, wobei der erste (10) und der zweite (12) Rotorteil um die Längsachse (X) der Rotorwelle (6) gegeneinander um einen Winkel (β) derart verdreht sind, dass die Anlagebereiche (20) des ersten Rotorteils (10) gegenüber den Anlagebereichen (22) des zweiten Rotorteils (12) im Umfangsrichtung versetzt sind.

2. Rotor nach Anspruch 1, **dadurch gekennzeichnet, dass** die ringförmigen Rotorteile (10, 12) jeweils einen Innenumfang von kreisförmiger Grundform aufweisen, und die Anlagebereiche (20, 22) sich im Querschnitt in Richtung einer Sehne zu dieser Grundform erstrecken.

3. Rotor nach Anspruch 1 oder 2, **dadurch gekennzeichnet, dass** die Anlagebereiche (20, 22) ebene Flächen bilden.

4. Rotor nach einem der vorangehenden Ansprüche, **dadurch gekennzeichnet, dass** der von den Anlagebereichen (20, 22) aufgespannte Querschnitt kleiner als der Außenquerschnitt der Rotorwelle (6) ist.

5. Rotor nach einem der vorangehenden Ansprüche, **dadurch gekennzeichnet, dass** es sich um einen Permanentmagnetrotor handelt.

6. Rotor nach einem der vorangehenden Ansprüche, **dadurch gekennzeichnet, dass** die Rotorteile (10, 12) Ausnehmungen (28) aufweisen, in welchen Permanentmagnete (30) angeordnet sind.

7. Rotor nach Anspruch 6, **dadurch gekennzeichnet, dass** die Ausnehmungen (28) in dem ersten Rotorteil (10) zu den Ausnehmungen (28) in dem zweiten Rotorteil (12) in Umfangsrichtung versetzt sind.

8. Rotor nach einem der vorangehenden Ansprüche, **dadurch gekennzeichnet, dass** der erste (10) und der zweite (12) Rotorteil identisch ausgebildet und um die Längsachse (X) der Rotorwelle (6) verdreht zueinander angeordnet sind.

9. Rotor nach einem der vorangehenden Ansprüche, **dadurch gekennzeichnet, dass** der erste Rotorteil (10) gegenüber dem zweiten Rotorteil (12) um einen Winkel (β) zwischen 5° und 25°, vorzugsweise zwischen 5° und 15° verdreht ist.

10. Rotor nach einem der vorangehenden Ansprüche, **dadurch gekennzeichnet, dass** die Rotorteile (10, 12) einen Außenumfang aufweisen, welcher mit abgeflachten Abschnitten (32) versehen ist.

11. Rotor nach Anspruch 10, **dadurch gekennzeichnet, dass** die abgeflachten Abschnitte (32) in den Umfangsbereichen der Rotorteile (10, 12) gelegen sind, in welchen die Endbereiche der Ausnehmungen (28) für die Permanentmagnete (30) gelegen sind.

12. Rotor nach einem der vorangehenden Ansprüche, **dadurch gekennzeichnet, dass** die Rotorwelle (6) zumindest in demjenigen Bereich (18), in welchem die Rotorteile aufgesetzt sind, eine gewalzte Oberfläche aufweist.

13. Elektromotor **gekennzeichnet durch** einen Rotor (4) nach einem der vorangehenden Ansprüche.

14. Elektromotor nach Anspruch 13, **dadurch gekennzeichnet, dass** er als bürstenloser Motor, insbesondere als Permanentmagnetmotor ausgebildet ist.

15. Pumpenaggregat mit einem Antriebsmotor, **dadurch gekennzeichnet, dass** der Antriebsmotor ein Elektromotor nach Anspruch 13 oder 14 ist.
